# EUROPÄISCHE PATENTANMELDUNG

(11) **EP 4 610 759 A1**
(43) Veröffentlichungstag der Anmeldung: **03.09.2025**
(21) Anmeldenummer: 24160559.1
(22) Anmeldetag: 29.02.2024
(51) Int. Cl.: G05B 23/02, G06N 20/00

(54) **VERFAHREN ZUR UNTERSTÜTZUNG BEI DER ANALYSE UND ÜBERWACHUNG EINES SYSTEMS**

(71) Anmelder: Deutsche Telekom AG, 53113 Bonn (DE)
(72) Erfinder: FRIESE, Ingo, 12305 Berlin (DE); MARKERT, Thomas, 10437 Berlin (DE)
(74) Vertreter: Maucher Jenkins Patent- und Rechtsanwälte

(57) **Zusammenfassung**

Die Erfindung betrifft ein Verfahren zur Unterstützung einer Person bei einer Systemanalyse und Überwachung eines technischen Systems auf drohende Funktionsstörungen oder technische Defekte. An einer oder mehreren Komponenten des Systems werden von einer Mehrzahl von Sensoren zyklisch unterschiedliche physikalische Größen quantifizierende Messwerte erfasst und als Datensatz einer Auswertungseinrichtung zugeführt. Ein jeweiliger Datensatz wird durch die Auswertungseinrichtung in ein Messwertebild transformiert, in welchem jeder Messwert durch ein Pixel Cluster einheitlichen Farb- oder Grauwerts repräsentiert wird. Dieses wird einer selbstlernenden, initial angelernten Einheit SLU der Auswertungseinrichtung übergeben und von dieser bewertet. Stuft die SLU dabei den Systemzustand anhand des aktuellen Messwertebildes als kritisch ein, wird ein Alarm ausgelöst. Die SLU Einstufung kann von der unterstützten Person kategorisiert, nämlich durch Betätigung eines Bedienelementes gegenüber der SLU bestätigt oder zurückgewiesen werden. Die der SLU-Einstufung durch die Person zugeordnete Kategorie kann von der SLU im weiteren Fortgang auf einen neuen Datensatz zwischenzeitlich erfasster Messwerte angewendet werden.

## Beschreibung

Die Erfindung betrifft ein Verfahren zur Unterstützung einer Person bei der Systemanalyse und bei der Überwachung eines technischen Systems im Hinblick auf drohende Funktionsstörungen oder technische Defekte. Bei der durch die Nutzung des Verfahrens unterstützen Person kann es sich beispielsweise um einen Nutzer des entsprechenden Systems oder aber auch um einen Systemverantwortlichen, wie insbesondere einen Systemadministrator, handeln. Hierbei muss es sich letztlich auch nicht um eine einzige Person handeln. Vielmehr kann es sich, insbesondere bei Systemen, welche sich rund um die Uhr im Einsatz befinden, auch um einen Personenkreis von Personen handeln, von denen beispielsweise jeweils eine Person in einem bestimmten Zeitraum für die Überwachung eines sich im Dauereinsatz befindenden Systems verantwortlich ist.

Das Verfahren ist vorzugsweise für die Analyse und Überwachung von Systemen der Informations- und Kommunikationstechnik vorgesehen, aber jedenfalls hierauf nicht beschränkt, auch wenn nachfolgend hauptsächlich auf diesen Einsatzbereich Bezug genommen wird.

Heutige Systeme der Informationstechnik, wie beispielsweise hochleistungsfähige Computer respektive Server oder gar ganze Serverfarmen, sowie Systeme der Kommunikationstechnik, wie beispielsweise Mobilfunknetze und große Datennetze, einschließlich des Internets, sind im Allgemeinen sehr komplex. Sie bestehen zumeist aus einer Vielzahl von Einzelkomponenten, welche miteinander interagieren, wobei in manchen Fällen Funktionsstörungen einer Systemkomponente zu Instabilitäten oder gar Ausfällen des Gesamtsystems führen können.

Derartiges gilt es daher zu vermeiden und vorzugsweise drohende Funktionsstörungen oder technische Defekte bereits zu erkennen, bevor diese tatsächlich auftreten. Während zum Beispiel die Überwachung räumlich weit verteilter Systeme bisher typischerweise dezentral durch Überwachung einzelner Komponenten an deren jeweiligem Standort erfolgte und auch heute häufig noch erfolgt, geht der Trend - natürlich immer abhängig von der Art des jeweiligen konkreten Systems - in Richtung einer ganzheitlichen zentralen Überwachung auch komplexer und räumlich verteilt angeordneter Systeme.

Gerade im Hinblick auf die hohe Komplexität vieler Systeme können Lösungen unter Nutzung des maschinellen Lernens respektive der künstlichen Intelligenz sehr vorteilhaft eingesetzt werden und zumindest die mit einem System betraute Person oder Personen bei dessen Überwachung und Analyse sehr gut unterstützen. Aber selbst, wenn solche intelligenten Lösungen derart ausgebildet sind, dass sie weitgehend automatisiert auf sich abzeichnende Fehlfunktionen oder Defekte reagieren, beispielsweise ein System oder einzelne Komponenten des Systems außer Betrieb nehmen, ist es für die Fachleute häufig sehr wichtig, entsprechende automatisiert erfolgende Reaktionen und deren Ursachen zu verstehen.

Dies kann jedoch beispielsweise wünschenswert sein, um möglichen Ursachen für Ausfälle des Systems oder seiner Komponenten noch frühzeitiger entgegenwirken zu können als bisher, aber auch, um den Entwicklern der Systeme dazu ein Feedback geben zu können, welches diesen eine weitere Verbesserung und Vervollkommnung entsprechender Systeme ermöglicht. Nach dem derzeitigen Stand der Technik sind dabei Systembetreuer und Administratoren regelmäßig darauf angewiesen, beispielsweise nach einen Systemausfall umfassende Tabellen mit Messwerten und Statusinformationen oder umfangreiche Logfiles zu studieren, um dann - sofern sie deren Komplexität nicht gar überfordert - entsprechende Schlussfolgerungen ziehen zu können.

Aufgabe der Erfindung ist es daher, Personen, wie Nutzer, Systembetreuer oder Administratoren, bei der Systemanalyse und der Überwachung insbesondere komplexer Systeme auf drohende Funktionsstörungen oder Defekte besser zu unterstützen. Hierfür ist ein entsprechendes Verfahren anzugeben.

Die Aufgabe wird durch ein Verfahren mit den Merkmalen des Patentanspruchs 1 gelöst. Vorteilhafte Aus- oder Weiterbildungen des erfindungsgemäßen Verfahrens sind durch die Unteransprüche gegeben.

Das zur Lösung der Aufgabe vorgeschlagene Verfahren zur Unterstützung einer Person (Nutzer und/oder Administrator) bei der Systemanalyse und der Überwachung eines technischen Systems im Hinblick auf drohende Funktionsstörungen oder technische Defekte, geht davon aus, dass mindestens eine Komponente des Systems zumindest während des Systembetriebs mittels einer Mehrzahl von Sensoren überwacht wird. Die Anzahl der insoweit überwachten Komponenten ist dabei selbstverständlich von der Art des Systems und von dessen Aufbau - so insbesondere auch der Zahl seiner Komponenten - abhängig. Entsprechendes gilt in Bezug auf die Art der verwendeten Sensoren respektive der mit ihrer Hilfe erfassten physikalischen Größen sowie für die Verteilung der Sensoren im System. Typischerweise wird sicherlich eine größere Zahl von Systemkomponenten und unterschiedlicher physikalischer Größen überwacht. Dies gilt zumal das Verfahren insbesondere für den Einsatz an komplexen System konzipiert ist, bei welchen Nutzer/Administratoren einer entsprechenden Unterstützung tatsächlich auch bedürfen.

Mittels der Sensoren werden die jeweiligen unterschiedlichen physikalischen Größen an respektive in dem System zyklisch, das heißt in regelmäßigen auf das System abgestimmten Abständen - beispielsweise ein Mal pro Minute oder aller 10 Sekunden - messtechnisch erfasst und die sie mit einer Maßzahl quantifizierenden Messwerte in Form eines Datensatzes einer Auswertungseinrichtung zugeführt. Die vorgenannte Auswertungseinrichtung kann dabei - auch wiederum abhängig von der Art des überwachten Systems - als integraler Bestandteil dieses Systems ausgebildet oder mit diesem als externe Einrichtung in eine Wirkverbindung gebracht sein.

Soweit vorstehend ausgeführt worden ist, dass das jeweilige System mittels der Sensoren zumindest während des Systembetriebs messtechnisch überwacht wird, sei an dieser Stelle angemerkt, dass es durchaus Systeme gibt, welche nicht permanent im Betrieb sind, die aber vielleicht Komponenten aufweisen, deren technische Eigenschaften sich gegebenenfalls auch unabhängig davon im Laufe der Zeit verändern und daher einer fortgesetzten Überwachung auch bei einem vorübergehenden Stillstand des Systems bedürfen.

Gemäß dem Verfahren wird ein jeweiliger Datensatz mit Messwerten durch die Auswertungseinrichtung in eine Grafik transformiert. Der Datensatz wird nach dem Prinzip der "Tabular Data Transformation" in ein Messwertebild transformiert, in welchem jeder Messwert des Datensatzes durch eine zusammenhängende Gruppe von Pixeln (im Weiteren auch Pixel Cluster) desselben Farb- oder Grauwerts repräsentiert wird. Das heißt, allen Pixeln eines einen Messwert zum Zeitpunkt x repräsentierenden Pixel Clusters wird, je nachdem, ob eine Transformation in eine farbige Grafik oder in eine Grafik mit Graustufen erfolgt, ein einheitlicher Farbwert oder ein einheitlicher Grauwert zugewiesen. Der jeweilige Farbwert oder Grauwert wird dabei im Zuge der Transformation derart festgelegt, dass er mit der Maßzahl korreliert, welche die von dem jeweiligen Messwert repräsentierte physikalische Größe zum Zeitpunkt seiner Erfassung mittels des jeweiligen Sensors quantifiziert.

Das im Zuge dieser Transformation entstehende aktuelle Messwertebild, nämlich beispielsweise eine zweidimensionale Grafik mit einer Mehrzahl jeweils einen Messwert repräsentierender Pixel Cluster, wird an eine von der Auswertungseinrichtung umfasste selbstlernende Komponente (im Weiteren SLU für Self Learning Unit) übergeben. Es handelt sich hierbei um eine Komponente der Auswertungseinrichtung, die in einer initialen Anlernphase bezüglich unterschiedlicher Zustandskonstellationen der gemonitorten physikalischen Größen und der diese Zustandskonstellationen beschreibenden Messwertebilder auf das überwachte System angelernt wurde.

Sofern diese SLU den durch das aktuelle Messwertebild beschriebenen Systemzustand oder eine an diesem gegenüber dem zuletzt von der SLU empfangenen Messwertebild eingetretene Veränderung als kritisch hinsichtlich eines möglichen Bevorstehens einer Funktionsstörung oder eines technischen Defekts des Systems einstuft, wird von der Auswertungseinheit ein Alarm ausgelöst. Im Zuge eines solchen Alarms wird insbesondere das aktuelle Messwertebild an einem Display der Auswertungseinrichtung respektive - sofern diese Bestandteil des überwachten Systems ist - des Systems ausgegeben. Dies schließt selbstverständlich nicht aus, dass darüber hinaus weitere Alarmsignale, wie beispielsweise akustische Signale, für den Nutzer/Administrator ausgegeben werden.

Die jeweilige durch das Verfahren unterstützte Person, also der Nutzer oder Administrator, erhält dann die Möglichkeit, anhand zumindest des mit dem Alarm angezeigten aktuellen Messwertebildes, diese von der SLU vorgenommene Einstufung "kritischer Systemzustand" durch Betätigung eines Bedienelements einer von mindestens zwei Kategorien zuzuordnen. Diese mindestens zwei Kategorien umfassen jedenfalls die beiden Kategorien "Bestätigung der SLU-Einstufung" sowie "Zurückweisung der SLU-Einstufung". Denkbar wäre darüber hinaus auch die Möglichkeit, einer Zuordnung der SLU-Einstufung zu einer dritten Kategorie, wie beispielsweise "Einstufung wahrscheinlich zutreffend" oder gar einer vierten Kategorie "Einschätzung nicht möglich" vorzusehen. Im letztgenannten Fall kann außerdem eine automatische Zuordnung zu dieser vierten Kategorie erfolgen, sofern der Nutzer/Administrator innerhalb einer festgelegten Zeit kein Bedienelement betätigt, also selbst eine Kategorisierung nicht vornimmt.

Die der SLU-Einstufung durch die unterstützte Person (Nutzer/Administrator) unmittelbar (durch Betätigung des entsprechenden Bedienelements) oder mittelbar (durch Unterlassen der Betätigung eines Bedienelements innerhalb einer festgelegten Zeitspanne) zugeordnete Kategorie wird über das mit der Auswertungseinrichtung in einer Wirkverbindung stehende Bedienelement an die SLU übergeben. Durch ihre Ausbildung als selbstlernende Einheit - selbstlernend zum Beispiel im Wege des Machine Learning oder nach KI-Ansatz (KI = künstliche Intelligenz) wird die SLU hierdurch in die Lage versetzt, die von dem Nutzer/Administrator vorgenommene Kategorisierung der SLU-Einstufung bei einer erneuten Ausführung des Verfahrens zu berücksichtigen, bei welcher die vorgenannten Schritte:
a.) Transformieren des Datensatzes mit Messwerten der Sensoren in eine Grafik,
b.) Übergabe des dabei entstehenden Messwertebildes an die SLU,
c.) Bewertung des Systemzustand anhand zumindest dieses Messwertebildes durch die SLU,
d.) Kategorisierung der SLU-Einstufung durch die unterstützte Person im Alarmfall und
e.) Berücksichtigung dieser Kategorie im weiteren Fortgang auf einen neuen Datensatz durch die Sensoren zwischenzeitlich erfasster und an die Auswertungseinrichtung übergebener Messwerte angewendet werden.

Die beiden letztgenannten Schritte kommen d.) und e.) kommen dabei selbstverständlich regelmäßig nur dann zum Tragen, wenn durch die SLU im Schritt c.) ein kritischer Systemzustand festgestellt wird. Ungeachtet dessen wird aber aus den vorangegangenen Ausführungen sicherlich deutlich, dass sich der Nutzer/Administrator und die SLU gewissermaßen gegenseitig unterstützen. Hierbei ist das Verfahren zudem ein rekursives Verfahren, da sich die durch seine fortgesetzte Ausführung erfolgende Unterstützung des Nutzers/Administrators immer weiter verbessern und vervollkommnen wird.

Sofern der Nutzer/Administrator die SLU-Einstufung durch Betätigung des entsprechenden Bedienelementes bestätigt, wonach sich das System im Hinblick auf die Auslösung des Alarms und die Ausgabe des aktuellen Messwertebildes in einem kritischen Systemzustand befindet und möglicherweise eine Funktionsstörung oder ein Defekt bevorsteht, wird die betreffende Person selbstverständlich hiergegen außerdem geeignete Maßnahmen ergreifen. Diese können - je nach Art des Systems - beispielsweise in einer vorübergehenden Außerbetriebnahme des Systems oder einzelner seiner Komponenten oder in einer Veränderung einstellbarer Systemparameter bestehen. In jedem Falle wird aber durch die SLU in einem dem Alarm folgenden Verfahrensdurchlauf, so beispielsweise auch bei einer Wiederinbetriebnahme des Systems nach einer temporären Betriebsunterbrechung, die durch den Nutzer/Administrator vorgenommene Kategorisierung (hier Bestätigung des Vorliegens eines kritischen Systemzustands) bei der Bewertung künftig erstellter Messwertebilder berücksichtigt.

Das Verfahren ist vorzugsweise so weitergebildet, dass das im Alarmfall ausgegebene aktuelle Messwertebild mit Zusatzinformationen, vorzugsweise textueller Art, überlagert wird. Hierbei kann den einzelnen Pixel Clustern insbesondere eine Information dazu beigefügt werden, in Bezug auf welche Komponente des (typischerweise mehrere voneinander unterscheidbare Komponenten umfassenden) Systems die durch ein jeweiliges Pixel Cluster repräsentierte physikalische Größe gemonitort wird. Diese Zusatzinformation kann vorzugsweise außerdem Angaben dazu enthalten, welche physikalische Größe für eine überwachte Systemkomponente respektive welche für diese Größe jeweils sensorisch erfasste Maßzahl durch ein jeweiliges Pixel Cluster repräsentiert wird. Was die bereits schon mehrfach angesprochene SLU (Self Learning Unit) anbelangt, so wird hierfür vorzugsweise ein neuronales Netz verwendet. Insbesondere in Kombination mit der "Tabular Data Transformation" kommt hierfür der Einsatz eines sogenannten Convolutional Neural Networt (CNN) in Betracht.

Das vorgeschlagene Verfahren kann darüber hinaus so ausgestaltet sein, dass der Nutzer/Administrator im Alarmfall, also bei der Ausgabe des aktuellen Messerwertebildes, zusätzlich die Möglichkeit hat, sich Messwertebilder bezüglich der bei vorausgegangenen Messzyklen mittels der Sensoren erfassten Messwerte anzeigen zu lassen, also gewissermaßen historische Daten einzusehen, um diese bei seiner Kategorisierung der aktuellen SLU-Einstufung "kritischer Systemzustand" mit berücksichtigen zu können. Das Verfahren kann zudem so implementiert werden, dass dem Nutzer/Administrator eine Einsichtnahme in historische Messdaten respektive in aus diesen erzeugte Messwertebilder an dem Display auch in dem Fall möglich ist, dass bei dem überwachten System eine Funktionsstörung oder ein Defekt ausnahmsweise ohne einen vorherigen Alarm aufgetreten ist. In Verbindung hiermit kann es beispielsweise der betreffenden Person außerdem ermöglicht sein ein solches Messwertebild zu historischen Daten (Messwerten) mittels eines mit der Auswertungseinrichtung in einer Wirkverbindung stehenden Bedienelementes als kritischen Systemzustand zu kategorisieren sowie dieses Messwertebild unter Zuordnung zu dieser Kategorie an die SLU zu übergeben. Dies kann dazu beitragen die Bewertung der in Messwertebilder transformierten Messdaten durch die SLU weiter zu verbessern.

Betreffend die Ausgabe eines aktuellen Messwertebildes (und gegebenenfalls historischer Messwertebilder) sind unterschiedliche Darstellungsformen denkbar. Eine mögliche Option besteht dabei darin, das respektive die jeweiligen Messwertebilder in Form einer dreidimensionalen Darstellung auszugeben. Gegebenenfalls kann der Nutzer/Administrator hierbei außerdem die Möglichkeit haben, diese dreidimensionale Grafik zu drehen und aus verschiedenen Blickwinkeln zu erfassen, um so die Kategorisierung der SLU-Einstufung zu erleichtern. Darüber hinaus kann es vorgesehen sein, dass der Nutzer/Administrator die Möglichkeit hat, sich beispielsweise bei einem größeren Messwertebild in einzelne Bereiche dieser Grafik hineinzuzoomen. Eine weitere Möglichkeit der Unterstützung des Nutzers/Administrators besteht darin, dem Messwertebild eine "Saliency Map" zu überlagern, also in der Grafik einzelne Bereiche, welche von besonderer Bedeutung für die SLU-Einstufung "kritischer Systemzustand" sind, in besonderer Weise stark hervorzuheben.

Nachfolgend soll ein mögliches Ausführungsbeispiel für die Verwendung respektive für eine mögliche Implementierung des vorgestellten Verfahrens gegeben werden. Beispielhaft betrachtet wird hierbei ein Computersystem in einem Netzwerk.

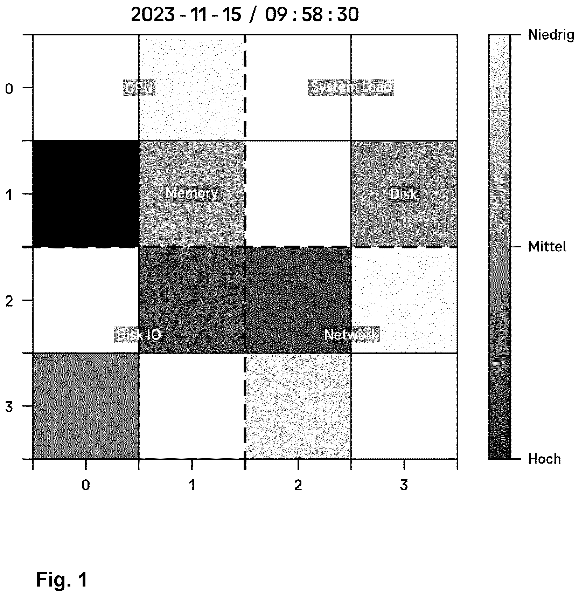

Die Fig. 1 zeigt ein mögliches Messwertebild für den Normalzustand eines solchen Computersystems, wie es beispielsweise einem nach dem Verfahren unterstützten Nutzer/Administrator als historisches Messwertebild, also als vor dem Eintritt eines kritischen Systemzustands erstelltes Messwertebild, insbesondere auf Abfrage durch die betreffende Person zur Anzeige gebracht werden könnte. Demnach - und dies wird anhand der dem Messwertebild überlagerten zusätzlichen textuellen Informationen erkennbar - werden mittels dafür geeigneter Sensoren an dem Computersystem Messwerte zur CPU (beispielsweise Temperatur und aktuelle CPU-Belastung), zur Speicherauslastung, zu den lesenden und schreibenden Zugriffen auf ein Laufwerk (Disc), zur allgemeinen Systembelastung (System Load) und zur Netzwerkaktivität erfasst. Sehr helle Flächen (Pixel Cluster) repräsentieren hierbei jeweils eine geringe Belastung oder - zum Beispiel hinsichtlich der CPU eine niedrige Temperatur -, wohingegen dunkel eingefärbte Pixel Cluster für eine entsprechend stärkere Belastung stehen. Bei dem in der Fig. 1 gezeigten Beispiel sind demnach die CPU sehr geringfügig und das Laufwerk vergleichsweise gering belastet, und zwar trotz demgegenüber vergleichsweise starker Netzwerkauslastung. Aufgrund der überwiegend hellen Pixel Cluster kann insoweit von einem Normalzustand des Computersystems ausgegangen werden. Das Messwertebild umfasst außerdem Angaben zu Datum und Uhrzeit seiner Erstellung.

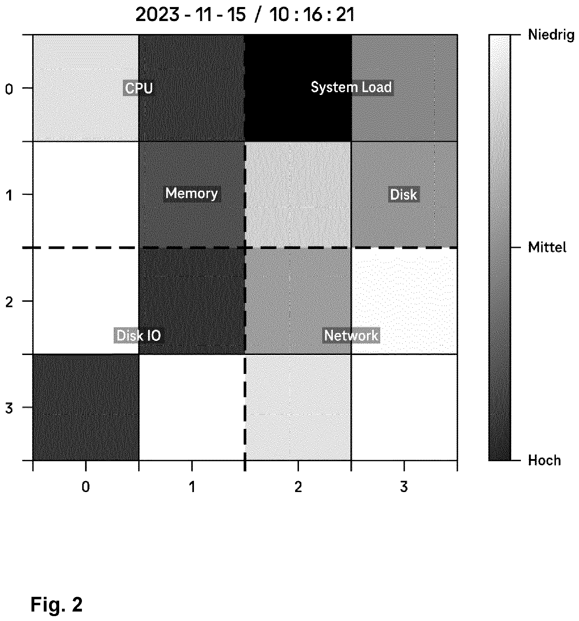

Im Gegensatz dazu zeigt die Fig. 2 ein Messwertebild für das System, wie es beispielsweise dem Nutzer/Administrator mit einem auf einen kritischen Systemzustand hinweisenden Alarm zur Ansicht gebracht werden könnte. Dem vorausgehend sind durch innerhalb des Systems platzierte Sensoren zyklisch (beispielsweise alle 10 Sekunden) entsprechende Messwerte unterschiedlicher physikalischer Größen erfasst worden und diese jeweils durch eine Auswertungseinrichtung in an eine SLU (Self Learning Unit) übergebene Messwertebilder gewandelt worden. Anhand der vergleichsweise dunklen Einfärbung in den entsprechenden Bereichen (Pixel Clustern) des gezeigten Messwertebildes wird erkennbar, dass in dem veranschaulichten Beispiel die CPU relativ stark belastet ist und darüber hinaus eine allgemein hohe Systembelastung (System Load) besteht. In dem angenommenen Beispiel könnte hierdurch eine entsprechende, die Sensordaten auswertende Auswertungseinrichtung mit dem Alarm auf einen Betriebszustand aufmerksam machen, der entsprechend der Einstufung ihrer SLU auf eine bevorstehende Funktionsstörung hinweist.

Sofern ein dieses aufgrund des Alarms angezeigte Messwertebild zur Kenntnis nehmender Nutzer/Administrator diesbezüglich anderer Auffassung ist, so kann er dieser Einstufung der SLU durch Betätigung eines entsprechenden Bedienelements widersprechen. Die insoweit über das Bedienelement vorgenommene Kategorisierung der SLU-Einstufung wird an die SLU zurückgegeben, welche hierdurch aufgrund ihrer Eigenschaft respektive Funktion als selbstlernende Einrichtung Schlussfolgerungen für die fortgesetzte respektive abermalige Ausführung des Verfahrens im Zuge des weiteren Betriebs des Systems zieht. In der Folge wird die Auswertungseinrichtung respektive deren SLU einen Alarm möglicherweise erst dann auslösen, wenn weitere der Pixel Cluster dunkel eingefärbt sind. Bestätigt hingegen der Nutzer/Administrator die SLU-Einstufung "kritischer Systemzustand" so wird er sicherlich auch geeignete Maßnahmen zur Abwendung einer Funktionsstörung oder eines Defekts ergreifen.

Bei den lediglich der Veranschaulichung des grundsätzlichen Ansatzes dienenden Figuren 1 und 2 handelt es sich um beispielhafte, stark vereinfachte Messwertebilder für ein zudem vergleichsweise einfaches System mit einer überschaubaren Anzahl von Komponenten. Aus Vereinfachungsgründen wurden dabei in den dem jeweiligen Messwertebild überlagerten Zusatzinformationen nicht alle durch Pixel Cluster repräsentierte Komponenten dezidiert bezeichnet. Auch auf Angaben zu den jeweils konkret in Bezug auf die einzelnen Komponenten gemonitorten physikalischen Größen wurde an dieser Stelle verzichtet.

## Patentansprüche

1. Verfahren zur Unterstützung einer Person bei einer Systemanalyse und Überwachung eines technischen Systems im Hinblick auf drohende Funktionsstörungen oder technische Defekte, wobei an einer oder mehreren Komponenten des Systems zumindest während Systembetriebs mittels einer Mehrzahl von Sensoren zyklisch unterschiedliche physikalische Größen quantifizierende Messwerte erfasst und als Datensatz einer Auswertungseinrichtung zugeführt werden, **dadurch gekennzeichnet, dass** das Verfahren rekursiv geführt wird, indem
a.) ein jeweiliger Datensatz mit Messwerten durch die Auswertungseinrichtung transformiert wird in ein Messwertebild, in welchem jeder Messwert des Datensatzes durch ein Pixel Cluster, nämlich eine zusammenhängende Gruppe von Pixeln repräsentiert wird, denen ein einheitlicher Farbwert oder ein Grauwert zugewiesen wird, welcher mit der, die von dem jeweiligen Messwert repräsentierte physikalische Größe quantifizierenden Maßzahl korreliert,
b.) das durch die Transformation eines jeweiligen Datensatzes entstehende aktuelle Messwertebild aus Pixel Clustern zur Bewertung übergeben wird an eine von der Auswertungseinrichtung umfasste selbstlernende, in einer initialen Anlernphase bezüglich unterschiedlicher Zustandskonstellationen der gemonitorten physikalischen Größen und der diese Zustandskonstellationen beschreibenden Messwertebilder auf das System angelernte Einheit SLU,
c.) durch die SLU zumindest das aktuelle Messwertebild bewertet wird und, sofern der von diesem beschriebene Systemzustand oder eine von der SLU festgestellte Veränderung des Systemzustands als kritisch hinsichtlich eines möglichen Bevorstehens einer Funktionsstörung oder eines technischen Defekts des Systems eingestuft wird, durch die Auswertungseinheit ein Alarm ausgelöst sowie das aktuelle Messwertebild an einem Display ausgegeben wird,
d.) die jeweilige unterstützte Person im Alarmfall, anhand zumindest des mit dem Alarm angezeigten aktuellen Messwertebildes, die SLU-Einstufung durch Betätigen eines Bedienelements einer von mindestens zwei, jedenfalls die Bestätigung dieser Einstufung sowie deren Zurückweisung umfassenden Kategorien zuordnet,
e.) die der SLU-Einstufung durch die Person zugeordnete Kategorie über das mit der Auswertungseinrichtung in einer Wirkverbindung stehende Bedienelement an die SLU übergeben wird zur Berücksichtigung bei der fortgesetzten Ausführung des Verfahrens.

2. Verfahren nach Anspruch 1, **dadurch gekennzeichnet, dass** das im Alarmfall ausgegebene aktuelle Messwertebild mit Zusatzinformationen überlagert wird, welche zumindest Angaben dazu enthalten, in Bezug auf welche Komponente des Systems die durch ein jeweiliges Pixel Cluster repräsentierte physikalische Größe gemonitort wird.

3. Verfahren nach Anspruch 2, **dadurch gekennzeichnet, dass** die überlagerten Zusatzinformationen Angaben zur Art der durch ein jeweiliges Pixel Cluster repräsentierten physikalischen Größe enthalten.

4. Verfahren nach einem der Ansprüche 1 bis 3, **dadurch gekennzeichnet, dass** das jeweilige aktuelle Messwertebild durch ein die SLU ausbildendes neuronales Netz bewertet wird.

5. Verfahren nach einem der Ansprüche 1 bis 4, **dadurch gekennzeichnet, dass** durch die Auswertungseinrichtung eine Vielzahl von Datensätzen mit Messwerten über einen längeren Zeitraum hinweg gespeichert wird, so dass durch die zu unterstützende Person zumindest im Alarmfall Messwertebilder historischer, vor dem Eintritt des Alarms erfasster Messdaten an dem Display zur Anzeige gebracht werden können.

6. Verfahren nach Anspruch 5, **dadurch gekennzeichnet, dass** es der zu unterstützenden Person ermöglicht wird, Messwertebilder historischer Messdaten an dem Display auch dann einsehen zu können, wenn bei dem überwachten System ein Funktionsstörung oder ein Defekt ausnahmsweise ohne einen vorherigen Alarm aufgetreten ist.

7. Verfahren nach Anspruch 6, **dadurch gekennzeichnet, dass** der zu unterstützenden Person ermöglicht wird, im Falle einer Funktionsstörung oder eines Defekts, welcher oder welchem ausnahmsweise kein durch die Auswertungseinrichtung ausgelöster Alarm voraus gegangen ist, ein zu historischen Daten durch die Auswertungseinrichtung erstelltes Messwertebild an dem Display einzusehen sowie dieses Messwertebild mittels eines mit der Auswertungseinrichtung in einer Wirkverbindung stehenden Bedienelementes als kritischen Systemzustand zu kategorisieren und unter Zuordnung zu dieser Kategorie an die SLU zu übergeben.

8. Verfahren nach einem der Ansprüche 1 bis 7, **dadurch gekennzeichnet, dass** das beim Eintritt eines Alarms an dem Display ausgegebene aktuelle Messwerte Bild in einer 3D-Darstellung zur Anzeige gebracht wird.

9. Verfahren nach Anspruch 8, **dadurch gekennzeichnet, dass** die zu unterstützende Person die 3D-Darstellung des aktuellen Messwertebildes mithilfe mindestens eines Bedienelementes aus unterschiedlichen Richtungen und Winkeln betrachten kann.

10. Verfahren nach einem der Ansprüche 1 bis 9, **dadurch gekennzeichnet, dass** mithilfe einer dem jeweils ausgegebenen Messwertebild überlagerten Saliency Map wichtige Bereiche des Messwertebildes hervorgehoben werden.

11. Verfahren nach einem der Ansprüche 1 bis 10, **dadurch gekennzeichnet, dass** der zu unterstützenden Person ermöglicht wird, mithilfe mindestens eines Bedienelementes in ausgewählte Bereiche des ausgegebenen Messwertebildes hineinzuzoomen.
